# FASCICULE DE BREVET EUROPEEN

(11) **EP 1 883 571 B1**
(45) Date de publication et mention de la délivrance du brevet: **19.11.2008**
(21) Numéro de dépôt: 06755524.3
(22) Date de dépôt: 24.05.2006
(51) Int. Cl.: B62D 65/06, B62D 25/08, B60J 5/10

(54) **SUPPORT ARRIERE POUR VEHICULE AUTOMOBILE, MODULE ARRIERE, PROCEDE DE FIXATION D UN TEL MODULE**
HECKSTÜTZE FÜR KRAFTFAHRZEUG, HECKMODUL UND VERFAHREN ZUR BEFESTIGUNG SOLCH EINES MODULS
REAR SUPPORT FOR MOTOR VEHICLE, REAR MODULE AND METHOD OF FIXING ONE SUCH MODULE

(30) Priorité: 25.05.2005 FR 0505238; 02.09.2005 FR 0509021
(43) Date de publication de la demande: 06.02.2008
(73) Titulaire: Compagnie Plastic Omnium, 69007 Lyon (FR)
(72) Inventeur: BONNEAU, Eric, F-38460 Saint Roman de Jalionas (FR); CORDEBAR, Francis, F-01150 Lagnieu (FR)
(74) Mandataire: Remy, Vincent Noel Paul
(86) Numéro de dépôt international: PCT/FR2006/001204
(87) Numéro de publication internationale: WO 2006/125926

(56) Documents cités:
- EP-A- 0 325 707
- EP-A- 1 154 113
- EP-A- 1 300 271
- DE-A1- 10 117 935

## Description

### Etat de la technique

On connaît dans l'état de la technique un véhicule comprenant un ouvrant arrière, notamment un hayon, manoeuvrable par pivotement autour d'un axe sensiblement horizontal situé au voisinage du toit du véhicule, voir EP 1 300 271 A, qui définit le préambule de la revendication 1.

Pour permettre le pivotement, le hayon est généralement fixé à la caisse du véhicule automobile au moyen de deux articulations. Deux vérins aident à l'ouverture du hayon.

Par ailleurs, il est de plus en plus courant que l'ouverture ou la fermeture du hayon soit réalisée par des actionneurs électriques.

### Problème posé par cet état de la technique

Le hayon d'un véhicule est assemblé sur la caisse du véhicule sur la chaîne de production. Or, du fait des nombreux éléments précités qui composent le hayon et ses moyens de fixation à la caisse du véhicule, l'opération d'assemblage prend du temps. Pour minimiser les coûts de fabrication, il est préférable de réduire le temps de montage sur la chaîne de production ainsi que le nombre d'opérations à mettre en oeuvre.

L'invention propose donc une solution qui permette une fixation rapide d'un hayon sur la caisse d'un véhicule.

### Solution technique proposée par l'invention

L'invention a pour objet un support arrière pour véhicule selon la revendication 1.

### Avantages apportés par l'invention

Grâce à l'invention, le hayon ainsi que les éléments permettant sa fixation à la caisse du véhicule peuvent être montés sur un support unique en dehors de la chaîne de production. Le support et les différents éléments peuvent être rapportés sur le véhicule sur la chaîne de production en une seule opération, ce qui offre un gain de temps considérable par rapport à l'état de la technique.

### Caractéristiques optionnelles

Un support selon l'invention peut en outre comporter l'une ou plusieurs des caractéristiques suivantes.
- Le support comprend des orifices traversant permettant la fixation de la partie fixe de l'articulation à la caisse par exemple au moyen de boulons.
- Le support comprend un caisson et un panneau de carrosserie fermant le caisson de sorte qu'une fois que le support arrière est rapporté à l'extrémité arrière de la caisse du véhicule, le panneau de carrosserie prolonge le toit du véhicule vers l'arrière. Ainsi, on peut loger les différents éléments dans le caisson et monter le caisson sur le véhicule automobile par l'extérieur du véhicule, le panneau de carrosserie masquant alors les différents éléments rapportés dans le caisson.
- Le panneau de carrosserie comprend une face visible depuis l'extérieur et une face opposée, la face opposée comprenant des moyens de fixation du panneau de carrosserie au caisson, ces moyens de fixation étant inaccessibles depuis la face visible du panneau et néanmoins activables depuis cette face visible. On peut donc monter le panneau sur le caisson depuis l'extérieur du véhicule, sans avoir besoin de s'introduire dans l'habitacle du véhicule pour le fixer.
- Les moyens de fixation du panneau de carrosserie au caisson comprennent des moyens d'encliquetage.
- Le support est conformé pour recevoir les parties fixes de deux articulations à axe de pivotement, le support comprenant des moyens de prépositionnement de la partie fixe de chaque articulation par rapport au support. Généralement, un ouvrant est fixé au moyen de deux articulations éloignées l'une de l'autre. Il est important que les articulations soient correctement positionnées l'une par rapport à l'autre pour que l'ouvrant puisse s'ouvrir et se fermer sans effort et que les articulations subissent le moins de frottements possibles. Le support constitue un référentiel dont les dimensions sont connues précisément, à la différence de la caisse en blanc du véhicule dont l'homme du métier ne connaît pas les dimensions avec précision. Il est alors avantageux de ménager sur le support des moyens de prépositionnement des articulations.
- Le support est conformé pour recevoir les parties fixes de deux articulations à axe de pivotement, la partie fixe de chaque articulation comprenant deux paliers distincts, le support comprenant des moyens de prépositionnement d'au moins un palier de chaque articulation par rapport au support. Il est courant que les parties fixes des articulations, notamment des articulations de type « col de cygne », comprennent deux paliers distincts. Il suffit alors de prépositionner l'un des paliers de chaque articulation, le positionnement le l'autre palier de chaque articulation étant alors réalisé par l'intermédiaire de la partie mobile de chaque articulation.
- Les moyens de prépositionnement sont venus de matière avec le support.
- Les moyens de prépositionnement sont agencés pour que les axes de pivotement des deux articulations soient sensiblement confondus. Il est très important que les axes de pivotement des deux articulations soient confondus pour réduire des frottements internes à ces articulations. Grâce au prépositionnement des articulations, on réduit de manière importante les frottements, le bruit ainsi que la fatigue des matériaux dans les articulations. La réduction des frottements permet également de concevoir des articulations de plus petites dimensions. De plus, dans le cas où les articulations sont motorisées, on peut prévoir des moteurs de puissance plus faible.
- Les moyens de prépositionnement comprennent des nervures rectilignes s'étendant sensiblement parallèlement à l'axe de pivotement de l'ouvrant. Le positionnement d'une articulation est obtenu par mise en butée de l'articulation sur la nervure.
- Les moyens de prépositionnement comprennent des plots ménagés sur le support, les plots étant aptes à pénétrer dans des lumières ménagées dans la partie fixe de chaque articulation.

### Autres objets de l'invention

L'invention a également pour objet un module arrière pour véhicule automobile, comprenant :
- un support tel que précédemment défini,
- un ouvrant manoeuvrable par pivotement autour d'un axe sensiblement horizontal,
- au moins une articulation ayant une partie fixe et une partie mobile par rapport à la partie fixe de manière à permettre le pivotement de l'ouvrant, la partie mobile étant solidaire de l'ouvrant,
- des moyens de fixation de la partie fixe de l'articulation à la caisse du véhicule, et
- au moins un équipement fonctionnel du véhicule, porté par le support.

Un tel module peut ainsi être monté en dehors de la chaîne de production et être rapporté sur le véhicule en une seule opération.

Un module selon l'invention peut en outre comporter l'une ou plusieurs des caractéristiques suivantes.
- L'équipement fonctionnel est l'un quelconque des éléments de l'ensemble constitué par une antenne, une carte électronique, un vérin d'aide à l'ouverture de l'ouvrant, un actionneur d'aide à l'ouverture et à la fermeture de l'ouvrant, une caméra de recul, un gicleur de lave glace, un réservoir d'eau pour lave glace, un feu stop, un éclairage pour l'habitacle du véhicule.
- Le panneau de carrosserie est solidaire de l'ouvrant.
- Le panneau de carrosserie est un spoiler.
- Le module comprend des première et seconde articulations de type pivot, chaque articulation étant telle que sa partie mobile comprend un arbre solidaire de l'ouvrant et sa partie fixe comprend deux paliers distincts, l'arbre et les paliers de chaque articulation étant coaxiaux.
- La première articulation comprend deux paliers glissants, c'est-à-dire autorisant un coulissement axial de l'arbre de la première articulation et la seconde articulation comprend un palier glissant et un palier de butée, c'est-à-dire un palier apte à supporter un effort axial engendré par l'arbre de la seconde articulation.
- Le module est tel que :
   o le support comprend des moyens de prépositionnement des trois paliers glissants de sorte que les axes des paliers glissants sont sensiblement confondus, et
   o le palier de butée est libre de se translater, par rapport au support, selon la direction définie par les axes des paliers glissants.
   Etant donné qu'au moins l'un des paliers de chaque articulation est prépositionné par rapport au module, on est assuré que les articulations sont coaxiales et que les frottements internes aux articulations sont minimisés. Du fait que le palier de butée est libre de se translater, par rapport au support, selon la direction définie par les axes des paliers glissants, et que les trois autres paliers sont glissants, l'ouvrant est mobile par rapport au support selon la direction des axes des paliers. Ainsi, lors de la fixation du module sur la caisse en blanc du véhicule, on peut ajuster la position de l'ouvrant selon la direction horizontale transversale au véhicule sans avoir besoin de déplacer le support.

L'invention a également pour objet un procédé de fixation d'un module arrière tel que précédemment défini à la caisse d'un véhicule automobile, caractérisé en ce que l'on exécute successivement les étapes suivantes :
- présentation du module avec l'ouvrant en position fermée en regard de la caisse, l'articulation étant accessible depuis l'extérieur du véhicule,
- ajustement de la position de l'ouvrant par rapport à au moins un point de référence,
- fixation de la partie fixe de l'articulation à la caisse du véhicule,
- masquage de l'articulation au moyen du panneau de carrosserie de sorte qu'elle n'est plus accessible ni visible depuis l'extérieur du véhicule.

Grâce à l'invention, l'ouvrant est fixé à la caisse en position fermée. Il est donc très rapide de réduire les jeux de montage puisque l'on n'a pas besoin d'ouvrir ni de fermer l'ouvrant à plusieurs reprises comme c'est le cas dans l'état de la technique. La position de l'ouvrant peut être ajustée alors qu'il est en position fermée.

Il est particulièrement avantageux d'utiliser ce procédé sur des chaînes de fabrication de véhicules automobiles. En effet, étant donné qu'il n'est pas nécessaire de dégager un espace à l'arrière du véhicule pour permettre l'ouverture ou la fermeture de l'ouvrant, on peut réduire l'espace entre véhicules successivement produits sur la chaîne de production. Cela permet donc un gain de place substantiel.

Enfin, ce nouveau procédé de fabrication n'est pas utilisé au détriment de l'esthétique du véhicule puisque les articulations sont masquées par un panneau de carrosserie qui les rend invisibles depuis l'extérieur du véhicule.

De préférence, le point de référence est choisi parmi l'un quelconque des éléments de l'ensemble comprenant la caisse du véhicule, un pare-chocs, une pièce de carrosserie, une aile de véhicule, un pavillon de toit de véhicule, un feu arrière de véhicule.

### Brève description des dessins

- La figure 1 est un schéma en éclaté d'un module arrière selon un premier mode de réalisation de l'invention ;
- la figure 2 est un schéma en perspective en en éclaté de l'arrière d'un véhicule automobile et du module de la figure 1 ;
- la figure 3 est un schéma selon une coupe longitudinale verticale de l'arrière du véhicule représenté sur la figure 2 ;
- la figure 4 est un schéma selon une coupe longitudinale verticale d'un véhicule muni d'un module selon un deuxième mode de réalisation de l'invention ;
- la figure 5 est un schéma selon une coupe longitudinale verticale d'un véhicule muni d'un module selon un troisième mode de réalisation de l'invention ;
- la figure 6 est un schéma selon une coupe longitudinale verticale d'un véhicule muni d'un module selon un troisième mode de réalisation de l'invention ;
- la figure 7 est un schéma vu du dessus d'un module selon un cinquième mode de réalisation de l'invention ;
- les figures 8 à 10 sont des schémas détaillés des fixations du module représenté sur la figure 7.

### Mode de réalisation principal de l'invention

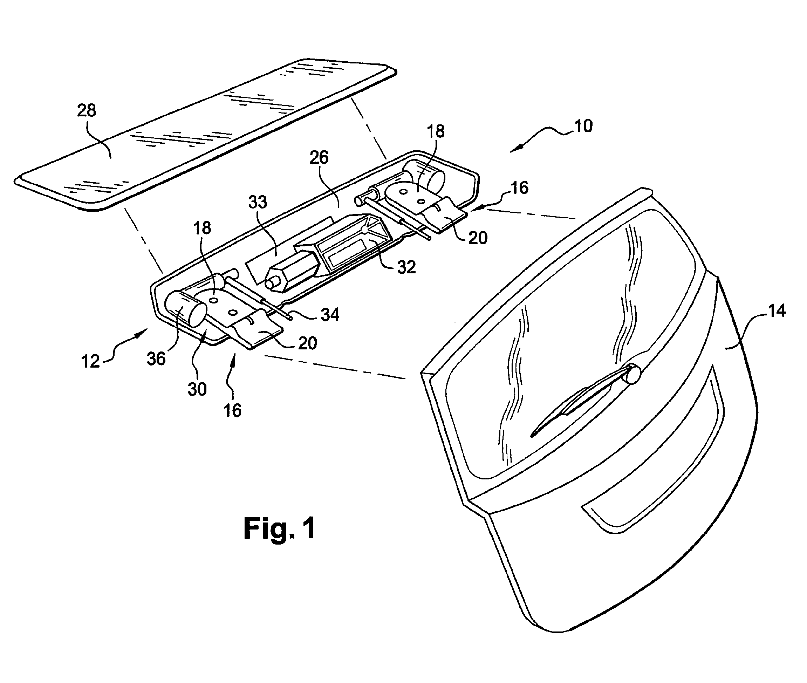

La figure 1 est une vue éclatée d'un module arrière 10 selon l'invention. Le module arrière 10 comprend un support 12, un ouvrant 14 manoeuvrable par pivotement autour d'un axe sensiblement horizontal, deux articulations 16 ayant chacune une partie fixe 18 et une partie mobile 20 par rapport à la partie fixe 18 de manière à permettre le pivotement de l'ouvrant 14, les parties mobiles 20 des articulations 16 étant solidaires de l'ouvrant 14.

Dans l'exemple représenté, l'ouvrant 14 est un hayon mais l'invention s'applique également à un coffre.

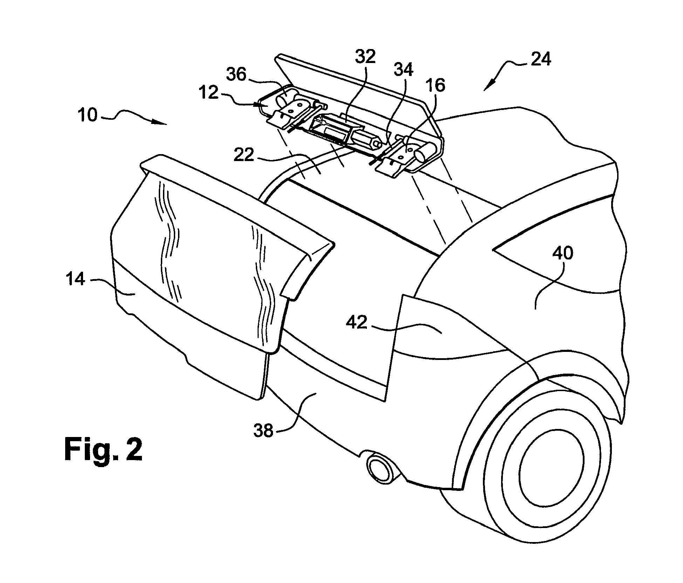

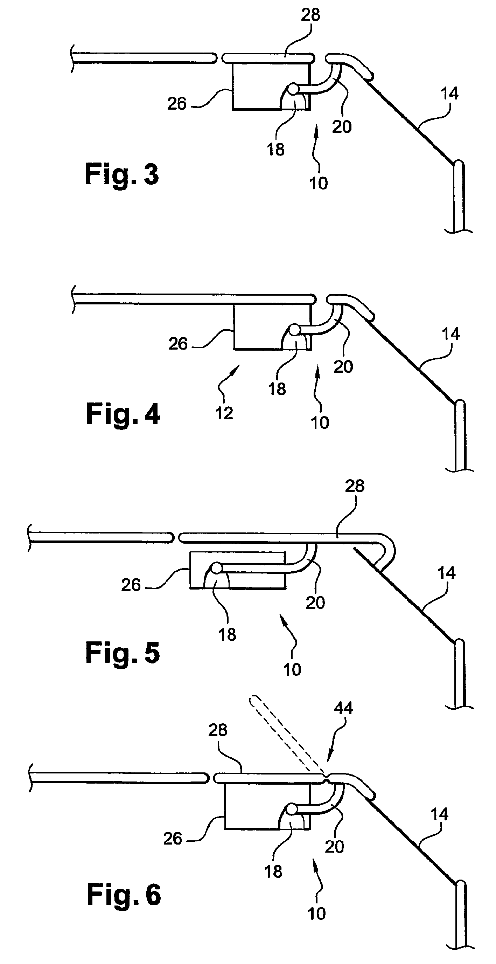

Comme représenté sur les figures 2 et 3, le support 12 arrière est destiné à être rapporté à l'extrémité arrière de la caisse 22 d'un véhicule 24. Un fois le support rapporté à l'extrémité arrière de la caisse 22 du véhicule 24, les parties fixes 18 des articulations 16 sont fixées à la caisse 22 par des moyens de fixation classiques (non représentés) autorisant un ajustement de la position des parties fixes des articulations par rapport à la caisse. Cela permet ainsi, de réduire les jeux de montage entre l'ouvrant et des pièces de carrosserie environnantes.

Par exemple, la caisse et les parties fixes des articulations comprennent des orifices, en regard l'un de l'autre, traversés par des boulons. Pour autoriser un ajustement de la position relative entre la caisse et les articulations, au moins l'un des orifices a un diamètre plus grand que celui de la tige du boulon correspondant.

Le support 12 comprend un caisson 26 réalisé en matière thermoplastique et un panneau 28 de carrosserie, réalisé en matière thermoplastique, fermant le caisson 26, de sorte qu'une fois que le support arrière 12 est rapporté à l'extrémité arrière de la caisse 22 du véhicule 24, le panneau 28 de carrosserie prolonge le toit du véhicule 24 vers l'arrière.

L'ouvrant 14 est relié au support 12 par l'intermédiaire des articulations 16. A cet effet, le caisson 26 du support 12 est conformé pour recevoir les parties fixes 18 des deux articulations 16 et pour permettre de fixer ces parties fixes 18 à la caisse 22. Par exemple, si les parties fixes des articulations sont reliées à la caisse par des boulons, on prévoit des orifices dans le support 12 pour permettre aux boulons de le traverser. De préférence, ces orifices sont oblongs, de sorte qu'il est possible d'ajuster la position du support sur la caisse pour limiter les jeux de montage. Le caisson peut être muni de moyens de fixation supplémentaires à la caisse, distincts des moyens de fixation des articulations à la caisse.

Le module arrière 10 comprend en outre des équipements fonctionnels 30 portés par le caisson 26 du support 12 qui est à cet effet conformé pour les recevoir. Sur l'exemple représenté, ces équipements fonctionnels 30 sont un actionneur 32 d'aide à l'ouverture et à la fermeture de l'ouvrant 14, une carte électronique 33 pour une antenne, deux vérins 34 d'aide à l'ouverture de l'ouvrant 14, et deux caméras 36 de recul.

Lorsqu'une antenne est logée dans le caisson du module arrière, il est important que le panneau 28 de carrosserie soit en matière thermoplastique pour ne pas perturber la propagation des ondes électromagnétiques.

Le module arrière 10 est pré-assemblé en dehors de la chaîne de fabrication des véhicules automobiles. Le module arrière 10 est ensuite monté en une seule étape sur la caisse 22 du véhicule automobile 24.

Le procédé de fixation du module arrière 10 à la caisse 22 du véhicule 24 est le suivant.

Au cours d'une première étape, on présente le module arrière 10 avec l'ouvrant 14 en position fermée en regard de la caisse 22, l'articulation 16 étant accessible depuis l'extérieur du véhicule. A cet effet, on découvre le caisson 26 en retirant le panneau 28 de carrosserie.

Ensuite, on ajuste la position de l'ouvrant 14 par rapport à un point de référence. Ce point de référence est par exemple, la caisse 22 du véhicule pour centrer l'ouvrant, un pare-chocs 38 du véhicule, une pièce de carrosserie, notamment un coté de caisse, une aile 40 du véhicule, le toit du véhicule, ou un feu arrière 42 du véhicule.

Puis, on fixe les parties fixes 18 des articulations 16 à la caisse 22 du véhicule grâce aux moyens de fixation de la partie fixe de l'articulation à la caisse du véhicule mentionnés plus haut.

Enfin, on masque les articulations 16 au moyen du panneau 28 de carrosserie, de sorte qu'elles ne sont plus accessibles ni visibles depuis l'extérieur du véhicule. La position du panneau de carrosserie est ajustée par rapport au toit ou à une pièce de carrosserie environnante telle que le coté de caisse.

Pour que cette étape de masquage puisse être réalisée depuis l'extérieur du véhicule, sans avoir à ouvrir l'ouvrant 14 où à s'introduire dans l'habitacle du véhicule pour fixer le panneau 28, il est avantageux que le panneau 28 de carrosserie comprenne une face visible depuis l'extérieur et une face opposée, la face opposée comprenant des moyens de fixation du panneau 28 au caisson, ces moyens de fixation étant inaccessibles depuis la face visible du panneau et néanmoins activables depuis cette face visible.

Les moyens de fixation doivent être inaccessibles depuis l'extérieur du véhicule, d'une part, pour des raisons esthétiques et, d'autre part, pour éviter le vol. Ces moyens de fixation sont par exemple des moyens d'encliquetage.

Ainsi, il n'est pas nécessaire d'ouvrir l'ouvrant 14 pour fixer le module arrière 10 à la caisse 22 du véhicule 24. Toutes les opérations de montage peuvent être réalisées depuis l'extérieur du véhicule. On prévoira cependant des moyens pour désactiver les moyens de fixation du panneau de carrosserie au caisson, depuis l'intérieur de ce véhicule. En effet, il peut être intéressant de pouvoir accéder au caisson 26, et aux différents équipements fonctionnels 30 qui y sont contenus, par exemple pour remplacer un équipement fonctionnel défectueux ou pour en ajouter un.

La mise en place d'un tel module sur un véhicule automobile nécessite certaines adaptations de la structure du véhicule automobile. En particulier, comme représenté sur les figures 2 et 3, il faut raccourcir l'arrière du toit du véhicule d'une longueur sensiblement égale à la largeur du panneau 28 de carrosserie.

### Autres modes de réalisation de l'invention

L'invention ne se limite pas au mode de réalisation principal qui vient d'être décrit.

En effet, selon un deuxième mode de réalisation de l'invention, représenté sur la figure 4, le support 12 arrière comprend un caisson 26 mais ne comprend pas de panneau de carrosserie fermant le caisson 26. Dans ce cas, l'opération de montage du module arrière 10 sur le véhicule automobile est réalisée avec l'ouvrant 14 ouvert ou bien avec l'ouvrant fermé en accédant aux moyens de fixation de la partie fixe des articulations à la caisse du véhicule par l'habitacle du véhicule. Ce mode de réalisation présente l'avantage de ne nécessiter aucune adaptation du toit du véhicule.

Selon un troisième mode de réalisation de l'invention, représenté sur la figure 5, le panneau 28 de carrosserie est un spoiler solidaire de l'ouvrant 14. Dans ce cas, il est nécessaire de prévoir des moyens de fixation amovible du spoiler 28 à l'ouvrant 14 pour pouvoir démonter le spoiler et accéder à l'intérieur du caisson 26.

Selon un quatrième mode de réalisation de l'invention représenté sur la figure 6, le panneau 28 de carrosserie fermant le caisson 26 est réalisé en matière thermoplastique et présente une épaisseur réduite selon une ligne 44 transversale à la direction d'avancement du véhicule automobile. Cette ligne 44 d'épaisseur réduite fait office de charnière et permet, par pliure, d'accéder à l'intérieur du caisson 26, comme représenté en pointillés sur la figure 6.

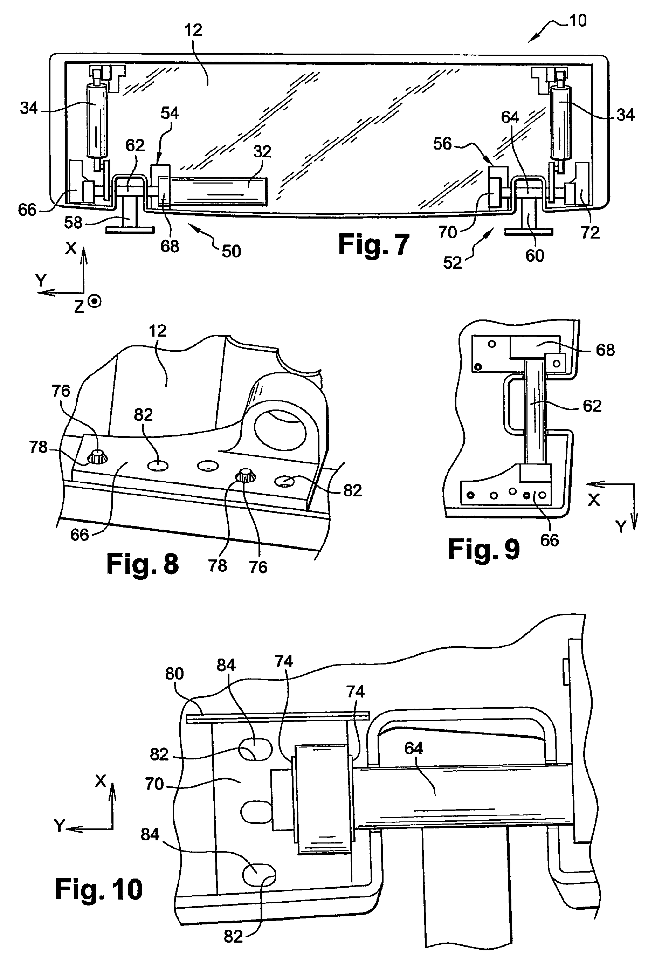

Un cinquième mode de réalisation de l'invention est représenté sur les figures 7 à 10. Pour la description de ces quatre figures, on définit le repère X, Y, Z de la façon suivante :
- la direction X correspond à la direction horizontale longitudinale du véhicule, orientée vers l'avant,
- la direction Z correspond à la verticale orientée vers le haut,
- la direction Y est telle que le repère X, Y, Z est orthonormal direct, c'est-à-dire que Y est transversal au véhicule.

Le module arrière 10 représenté sur la figure 7 comprend un support allongé 12 s'étendant selon la direction Y. Le module arrière 10 comprend des première 50 et seconde 52 articulations de type pivot, d'axes orientés selon Y. Les articulations 50 et 52 comprennent respectivement une partie fixe 54, 56 et une partie mobile 58, 60 comprenant un arbre 62, 64 solidaire de l'ouvrant. Comme représenté sur la figure 7, des vérins 34 d'aide à l'ouverture de l'ouvrant sont reliés aux arbres 62 et 64, et un actionneur 32 d'aide à l'ouverture et à la fermeture de l'ouvrant est relié à l'arbre 62.

Chaque partie fixe 54, 56 comprend respectivement deux paliers 66, 68 et 70, 72. Les deux paliers 66 et 68 de la partie fixe 54 de la première articulation 50 ainsi que le palier 72 de la partie fixe 56 de la seconde articulation 52 sont des paliers glissants, c'est-à-dire autorisant un coulissement axial de l'arbre 62. La première articulation 50 est représentée plus en détails sur la figure 9.

Le palier 70 de la partie fixe 56 de la seconde articulation 52 est un palier de butée, c'est-à-dire un palier apte à supporter un effort axial engendré par l'arbre 64 de la seconde articulation. Ce palier 70 est représenté plus précisément sur la figure 10. La reprise des efforts axiaux est assurée au moyen de cir-clips 74 positionnés sur l'arbre 64, de part et d'autre du palier 70.

Le support 12 comprend des moyens de prépositionnement des paliers 66, 68, 70, 72, agencés sur le support pour que les axes de paliers soient sensiblement confondus et s'étendent selon la direction Y. Etant donné que les dimensions du support sont connues avec précision, les moyens de prépositionnement permettent de positionner correctement les paliers, les uns par rapport aux autres.

Les moyens de prépositionnement des paliers glissants 66, 68 et 72 sont visibles sur la figure 8 qui représente le palier 66. Les moyens de prépositionnement comprennent des plots 76 ménagés sur le support 12, les plots 76 étant aptes à pénétrer dans des lumières 78 ménagées dans chaque palier. Ainsi, les trois paliers glissants sont solidaires du support.

Les moyens de prépositionnement du palier de butée 70 sont visibles sur la figure 10. Ces moyens de prépositionnement comprennent une nervure 80 rectiligne s'étendant sensiblement parallèlement à l'axe des paliers, c'est-à-dire selon la direction Y. Le palier de butée 70 est au contact de la nervure 80 qui permet donc un positionnement précis du palier 70 selon la direction X. Le palier de butée 70 ne comprend pas de plots de prépositionnement si bien qu'il est libre de se translater, par rapport au support 12, selon la direction Y.

Outre les lumières 78 destinées au prépositionnement, les quatre paliers 66, 68, 70, 72 comprennent des lumières 82 formant moyens de fixation des paliers sur la caisse 22 du véhicule. A cet effet, le support 12 comprend des orifices traversant 84, visibles sur la figure 10, en regard des lumières 82. Ainsi, il est possible de fixer les paliers à la caisse au moyen de boulons (non-représentés), les vis des boulons traversant alors à la fois les lumières 82 et les orifices 84. Etant donné que le palier de butée 70 est libre de se translater, par rapport au support 12, selon la direction Y, il est préférable que les orifices 84 en regard des lumières 82 du palier de butée 70, soient de forme oblongue selon la direction Y.

Le procédé de fixation du module arrière 10 à la caisse 22 du véhicule 24 est alors le suivant.

Au cours d'une première étape, on présente le module arrière 10 avec l'ouvrant 14 en position fermée en regard de la caisse 22, les articulations 50 et 52 étant accessibles depuis l'extérieur du véhicule.

Ensuite, on ajuste la position de l'ouvrant 14 par rapport à un point de référence. Ce point de référence est par exemple, la caisse 22 du véhicule pour centrer l'ouvrant, un pare-chocs 38 du véhicule, une pièce de carrosserie, notamment un coté de caisse, une aile 40 du véhicule, le toit du véhicule, ou un feu arrière 42 du véhicule.

Grâce à l'utilisation des quatre paliers 66, 68, 70, 72 précédemment définis, l'ouvrant peut être translaté, selon la direction Y, par rapport au support. En effet, les trois paliers glissants 66, 68 et 72 autorisent la translation selon Y des arbres 62 et 64, et le palier de butée 70 est libre de se translater, par rapport au support 12, selon la direction Y.

Ainsi, on ajuste la position de l'ouvrant 14 selon Y en le déplaçant par rapport au support 12.

Une fois que le positionnement de l'ouvrant selon Y est correct, on fixe les paliers à la caisse 22 du véhicule grâce aux moyens de fixation des paliers à la caisse du véhicule mentionnés plus haut.

Alors, grâce au palier de butée 70, le mouvement de l'ouvrant selon la direction Y par rapport à la caisse n'est plus autorisé puisque le palier 70 est fixé à la caisse.

## Revendications

1. Support (12) arrière pour véhicule (24) destiné à être rapporté à l'extrémité arrière de la caisse (22) du véhicule (24) au voisinage d'un ouvrant (14) manoeuvrable par pivotement autour d'un axe (Y) sensiblement horizontal, le pivotement étant assuré au moyen d'au moins une articulation (16 ; 50, 52) ayant une partie fixe (18 ; 54, 56, 66, 68, 70, 72) et une partie (20 ; 58, 60, 62, 64) solidaire de l'ouvrant, mobile par rapport à la partie fixe (18; 54, 56, 66, 68, 70, 72), le support (12) étant conformé pour recevoir la partie fixe (18 ; 54, 56, 66, 68, 70, 72) d'au moins une articulation (16 ; 50, 52) et permettre la fixation de cette partie fixe (18 ; 54, 56, 66, 68, 70, 72) à la caisse (22) et pour recevoir au moins un équipement (30, 32, 34, 36) fonctionnel du véhicule (24), **caractérisé en ce que** le support comprend un caisson (26) et un panneau (28) de carrosserie fermant le caisson (26) de sorte qu'une fois que le support arrière (12) est rapporté à l'extrémité arrière de la caisse (22) du véhicule, le panneau (28) de carrosserie prolonge le toit du véhicule (24) vers l'arrière.

2. Support (12) arrière selon la revendication 1, comprenant des orifices traversant (84) permettant la fixation de la partie fixe (18 ; 54, 56, 66, 68, 70, 72) de l'articulation (16 ; 50, 52) à la caisse (22), par exemple au moyen de boulons.

3. Support arrière (12) selon la revendication 1 ou 2, dans lequel le panneau (28) de carrosserie comprend une face visible depuis l'extérieur et une face opposée, la face opposée comprenant des moyens de fixation du panneau de carrosserie au caisson (26), ces moyens de fixation étant inaccessibles depuis la face visible du panneau (28) et néanmoins activables depuis cette face visible.

4. Support arrière (12) selon la revendication 3, dans lequel les moyens de fixation du panneau (28) de carrosserie au caisson (26) comprennent des moyens d'encliquetage.

5. Support arrière (12) selon l'une quelconque des revendications 1 à 4, conformé pour recevoir les parties fixes (54, 56, 66, 68, 70, 72) de deux articulations (50, 52) à axe de pivotement, le support comprenant des moyens de prépositionnement (76 ; 80) de la partie fixe (54, 56, 66, 68, 70, 72) de chaque articulation (50, 52) par rapport au support (12).

6. Support arrière (12) selon l'une quelconque des revendications 1 à 4, conformé pour recevoir les parties fixes (54, 56, 66, 68, 70, 72) de deux articulations (50, 52) à axe de pivotement, la partie fixe de chaque articulation comprenant deux paliers (66, 68, 70, 72) distincts, le support comprenant des moyens de prépositionnement (76 ; 80) d'au moins un palier de chaque articulation par rapport au support.

7. Support arrière (12) selon la revendication 5 ou 6, dans lequel les moyens de prépositionnement (76 ; 80) sont venus de matière avec le support.

8. Support arrière (12) selon l'une quelconque des revendications 5 à 7, dans lequel les moyens de prépositionnement (76 ; 80) sont agencés pour que les axes de pivotement des deux articulations (50, 52) soient sensiblement confondus.

9. Support arrière selon la revendication 8, dans lequel les moyens de prépositionnement (76 ; 80) comprennent des nervures rectilignes (80) s'étendant sensiblement parallèlement à l'axe de pivotement de l'ouvrant.

10. Support arrière (12) selon l'une quelconque des revendications 5 à 9, dans lequel les moyens de prépositionnement (76; 80) comprennent des plots (76) ménagés sur le support, les plots (76) étant aptes à pénétrer dans des lumières (82) ménagées dans la partie fixe (54, 56, 66, 68, 70, 72) de chaque articulation.

11. Module (10) arrière pour véhicule automobile, comprenant :
- un support (12) selon l'une quelconque des revendications 1 à 10,
- un ouvrant (14) manoeuvrable par pivotement autour d'un axe sensiblement horizontal,
- au moins une articulation (16) ayant une partie fixe (18) et une partie mobile (20) par rapport à la partie fixe (18) de manière à permettre le pivotement de l'ouvrant (14), la partie mobile (20) étant solidaire de l'ouvrant (14),
- des moyens de fixation de la partie fixe (18) de l'articulation (16) à la caisse (22) du véhicule (24), et
- au moins un équipement fonctionnel (30, 32, 34, 36) du véhicule (24), porté par le support (12).

12. Module (10) arrière selon la revendication 11, dans lequel l'équipement fonctionnel (30) est l'un quelconque des éléments de l'ensemble constitué par une antenne, une carte électronique (33), un vérin (34) d'aide à l'ouverture de l'ouvrant, un actionneur (32) d'aide à l'ouverture et à la fermeture de l'ouvrant (14), une caméra de recul (36), un gicleur de lave glace, un réservoir d'eau pour lave glace, un feu stop, un éclairage pour l'habitacle du véhicule.

13. Module (10) arrière selon la revendication 11 ou 12, dans lequel le panneau (28) de carrosserie est solidaire de l'ouvrant (14).

14. Module (10) arrière selon la revendication 13, dans lequel le panneau (28) de carrosserie est un spoiler.

15. Module (10) arrière selon l'une quelconque des revendications 11 à 14, comprenant des première (50) et seconde (52) articulations de type pivot, chaque articulation étant telle que sa partie mobile (58, 60, 62, 64) comprend un arbre (62, 64) solidaire de l'ouvrant (14) et sa partie fixe (54, 56, 66, 68, 70, 72) comprend deux paliers distincts (66, 68, 70, 72), l'arbre et les paliers de chaque articulation étant coaxiaux.

16. Module (10) arrière selon la revendication 15, dans lequel la première articulation (50) comprend deux paliers glissants (66, 68), c'est-à-dire autorisant un coulissement axial de l'arbre de la première articulation et la seconde (52) articulation comprend un palier glissant (72) et un palier de butée (70), c'est-à-dire un palier apte à supporter un effort axial engendré par l'arbre de la seconde articulation.

17. Module (10) arrière selon la revendication 16, le support (12) étant selon l'une quelconque des revendications 6 à 10 prise nécessairement en combinaison avec la revendication 6, dans lequel :
- le support comprend des moyens de prépositionnement (76 ; 80) des trois paliers glissants (66, 68, 72) de sorte que les axes des paliers glissants (66, 68, 72) sont sensiblement confondus, et
- le palier de butée (70) est libre de se translater, par rapport au support, selon la direction (Y) définie par les axes des paliers glissants.

18. Procédé de fixation d'un module (10) arrière selon l'une quelconque des revendications 11 à 17 à la caisse (22) d'un véhicule automobile, **caractérisé en ce que** l'on exécute successivement les étapes suivantes :
- présentation du module (10) avec l'ouvrant (14) en position fermée en regard de la caisse (22), l'articulation (16) étant accessible depuis l'extérieur du véhicule (24),
- ajustement de la position de l'ouvrant (14) par rapport à au moins un point de référence (22, 38, 40, 42),
- fixation de la partie fixe (18) de l'articulation (16) à la caisse (22) du véhicule,
- masquage de l'articulation (16) au moyen du panneau (28) de carrosserie de sorte qu'elle n'est plus accessible ni visible depuis l'extérieur du véhicule.

19. Procédé de fixation selon la revendication 18, dans lequel le point de référence est choisi parmi l'un quelconque des éléments de l'ensemble comprenant la caisse (22) du véhicule, un pare-chocs (38), une pièce de carrosserie, une aile (40) de véhicule, un pavillon de toit de véhicule, un feu arrière (42) de véhicule.

## Claims

1. A rear support (12) for a vehicle (24), the support being designed for fitting to the rear end of the body (22) of the vehicle (24) in the vicinity of a door (14) movable to pivot about an axis (Y) that is substantially horizontal, pivoting being enabled by at least one hinge (16; 50, 52) having a stationary portion (18; 54, 56, 66, 68, 70, 72) and a portion (20; 58, 60, 62, 64) secured to the door and movable relative to the stationary portion (18; 54, 56, 66, 68, 70, 72), the support (12) being shaped to receive the stationary portion (18; 54, 56, 66, 68, 70, 72) of at least one hinge (16; 50, 52) in order to enable said stationary portion (18; 54, 56, 66, 68, 70, 72) to be secured to the body (22) and in order to receive at least one item of functional equipment (30, 32, 34, 36) of the vehicle (24), **characterized in that** it comprises a box (26) and a bodywork panel (28) closing the box (26) such that once the rear support (12) has been fitted to the rear end of the vehicle body (22), the bodywork panel (28) extends the roof of the vehicle (24) rearwards.

2. A rear support (12) according to claim 1, including through orifices (84) enabling the stationary portion (18; 54, 56, 66, 68, 70, 72) of the hinge (16; 50, 52) to be secured to the body (22), e.g. by means of bolts.

3. A rear support (12) according to claim 1 or claim 2, in which the bodywork panel (28) comprises a face that is visible from outside, and an opposite face, the opposite face including fastener means for securing the bodywork panel to the body (26), said fastener means being inaccessible from the visible face of the panel (28), while nevertheless being suitable for being activated from said visible face.

4. A rear support (12) according to claim 3, in which the fastener means for securing the bodywork panel (28) to the body (26) comprise snap-fastener means.

5. A rear support (12) according to any one of claims 1 to 4, shaped so as to receive the stationary portions (54, 56, 66, 68, 70, 72) of two hinges (50, 52) having a pivot axis, the support including prepositioning means (76; 80) for prepositioning the stationary portion (54, 56, 66, 68, 70, 72) of each hinge (50, 52) relative to the support (12).

6. A rear support (12) according to any one of claims 1 to 4, shaped to receive the stationary portions (54, 56, 66, 68, 70, 72) of two hinges (50, 52) having a pivot axis, the stationary portion of each hinge comprising two distinct bearings (66, 68, 70, 72), the support including prepositioning means (76; 80) for positioning at least one bearing of each hinge relative to the support.

7. A rear support (12) according to claim 5 or claim 6, in which the prepositioning means (76; 80) are integrally formed with the support.

8. A rear support (12) according to any one of claims 5 to 7, in which the prepositioning means (76; 80) are arranged so that the pivot axes of the two hinges (50, 52) coincide substantially.

9. A rear support (12) according to claim 8, in which the prepositioning means (76; 80) comprise rectilinear ribs (80) extending substantially parallel to the pivot axis of the door.

10. A rear support (12) according to any one of claims 5 to 9, in which the prepositioning means (76; 80) comprise studs (76) arranged on the support, the studs (76) being suitable for penetrating into openings (82) formed in the stationary portion (54, 56, 66, 68, 70, 72) of each hinge.

11. A rear module (10) for a motor vehicle, the module comprising:
• a support (12) according to any one of claims 1 to 10;
• a door (14) movable to pivot about an axis that is substantially horizontal;
• at least one hinge (16) having a stationary portion (18) and a moving portion (20) movable relative to the stationary portion (18) in such a manner as to enable the door (14) to pivot, the moving portion (20) being secured to the door (14);
• fastener means for securing the stationary portion (18) of the hinge (16) to the body (22) of the vehicle (24); and
• at least one item of functional equipment (30, 32, 34, 36) on the vehicle (24) carried by the support (12).

12. A rear module (10) according to claim 11, in which the functional equipment (30) is any of the items in the set constituted by: an antenna, an electronics card (33), a cylinder (34) for assisting in opening the door, an actuator (32) for assisting in opening and closing the door (14), a reversing camera (36), a washer jet, a washer liquid tank, a stop light, and a vehicle cabin light.

13. A rear module (10) according to claim 11 or claim 12, in which the bodywork panel (28) is secured to the door (14).

14. A rear module (10) according to claim 13, in which the bodywork panel (28) is a spoiler.

15. A rear module (10) according to any one of claims 11 to 14, having first and second pivot type hinges (50 and 52), each hinge being such that its moving portion (58, 60, 62, 64) comprises a pin (62, 64) secured to the door (14), and its stationary portion (54, 56, 66, 68, 70, 72) comprises two distinct bearings (66, 68, 70, 72), the pin and the bearings for each hinge sharing a common axis.

16. A rear module (10) according to claim 15, in which the first hinge (50) comprises two sliding bearings (66, 68), i.e. allowing the pin of the first hinge to slide axially, and the second hinge (52) comprises one sliding bearing (72) and one thrust bearing (70), i.e. a bearing suitable for withstanding an axial force generated by the pin of the second hinge.

17. A rear module (10) according to claim 16, the support (12) being according to any one of claims 6 to 10, necessarily taking in combination with claim 16, in which:
• the support includes prepositioning means (76; 80) for prepositioning the three sliding bearings (66, 68, 72) such that the axes of the sliding bearings (66, 68, 72) coincide substantially; and
• the thrust bearing (70) is free to move in translation relative to the support along the Y direction defined by the axes of the sliding bearings.

18. A method of securing a rear module (10) according to any one of claims 11 to 17 to the body (22) of a motor vehicle, the method being **characterized in that** the following steps are performed in succession:
• presenting the module (10) with the door (14) in the closed position to face the body (22), the hinge (16) being accessible from outside the vehicle (24);
• adjusting the position of the door (14) relative to at least one reference point (22, 38, 40, 42);
• securing the stationary portion (18) of the hinge (16) to the body (22) of the vehicle; and
• masking the hinge (16) by means of the bodywork panel (28) so that the hinge is no longer visible from outside the vehicle.

19. A method according to claim 18, in which the reference point is selected from any one of the items in the set comprising: the vehicle body (22), a bumper (38), a bodywork part, a vehicle fender (40), a vehicle roof member, and a vehicle rear light (42).

## Patentansprüche

1. Hintere Stütze (12) für ein Fahrzeug (24), dazu bestimmt, am hinteren Ende des Aufbaus (22) des Fahrzeugs (24) in Nähe einer durch Schwenken um eine im Wesentlichen waagrechte Achse (Y) zu betätigende Tür (14) ausgerichtet zu werden, wobei das Schwenken mit Hilfe von wenigstens einer Gelenkverbindung (16; 50, 52) mit einem festen Teil (18; 54, 56, 66, 68, 70, 72) und einem mit der Tür verbundenen Teil (20; 58, 60, 62, 64), beweglich zum festen Teil (18; 54, 56, 66, 68, 70, 72), gewährleistet wird, wobei die Stütze (12) zur Aufnahme des festen Teils (18; 54, 56, 66, 68, 70, 72) von wenigstens einer Gelenkverbindung (16; 50, 52) und zum Ermöglichen der Befestigung dieses festen Teils (18; 54, 56, 66, 68, 70, 72) am Aufbau (22) und zur Aufnahme von wenigstens einer funktionalen Ausstattung (30, 32, 34, 36) des Fahrzeugs (24) ausgebildet ist, **dadurch gekennzeichnet, dass** die Stütze einen Kasten (26) und eine Platte (28) der Karosserie zum Verschließen des Kastens (26) aufweist, so dass, sobald die hintere Stütze (12) am hinteren Ende des Aufbaus (22) des Fahrzeugs ausgerichtet ist, die Platte (28) der Karosserie das Dach des Fahrzeugs (24) nach hinten verlängert.

2. Hintere Stütze (12) nach Anspruch 1, umfassend quer verlaufende Öffnungen (84), welche die Befestigung des festen Teils (18; 54, 56, 66, 68, 70, 72) der Gelenkverbindung (16; 50, 52) am Aufbau (22) beispielsweise mit Schrauben ermöglichen.

3. Hintere Stütze (12) nach Anspruch 1 oder 2, wobei die Platte (28) der Karosserie eine von außen sichtbare Seite und eine gegenüberliegende Seite umfasst, wobei die gegenüberliegende Seite Mittel zur Befestigung der Platte der Karosserie am Kasten (26) umfasst, wobei diese Mittel zur Befestigung von der sichtbaren Seite der Platte (28) aus nicht zugänglich sind und dennoch von dieser sichtbaren Seite aus zu betätigen sind.

4. Hintere Stütze (12) nach Anspruch 3, wobei die Mittel zur Befestigung der Platte (28) der Karosserie am Kasten (26) Mittel zum Einrasten umfassen.

5. Hintere Stütze (12) nach einem der Ansprüche 1 bis 4, ausgebildet zum Aufnehmen der festen Teile (54, 56, 66, 68, 70, 72) von zwei Gelenkverbindungen (50, 52) mit Schwenkachse, wobei die Stütze Mittel zum Vorpositionieren (76, 80) des festen Teils (54, 56, 66, 68, 70, 72) von jeder Gelenkverbindung (50, 52) zur Stütze (12) umfasst.

6. Hintere Stütze (12) nach einem der Ansprüche 1 bis 4, ausgebildet zum Aufnehmen der festen Teile (54, 56, 66, 68, 70, 72) von zwei Gelenkverbindungen (50, 52) mit Schwenkachse, wobei der feste Teil von jeder Gelenkverbindung zwei separate Lager (66, 68, 70, 72) umfasst, wobei die Stütze Mittel zum Vorpositionieren (76, 80) von wenigstens einem Lager von jeder Gelenkverbindung zur Stütze umfasst.

7. Hintere Stütze (12) nach Anspruch 5 oder 6, wobei die Mittel zum Vorpositionieren (76, 80) Bestandteil der Stütze sind.

8. Hintere Stütze (12) nach einem der Ansprüche 5 bis 7, wobei die Mittel zum Vorpositionieren (76, 80) so angeordnet sind, dass die Schwenkachsen der beiden Gelenkverbindungen (50, 52) im Wesentlichen übereinstimmen.

9. Hintere Stütze nach Anspruch 8, wobei die Mittel zum Vorpositionieren (76, 80) gerade Rippen (80) umfassen, die sich im Wesentlichen parallel zur Schwenkachse der Tür erstrecken.

10. Hintere Stütze (12) nach einem der Ansprüche 5 bis 9, wobei die Mittel zum Vorpositionieren (76, 80) auf der Stütze angeordnete Kontakte (76) umfassen, wobei die Kontakte (76) in die im festen Teil (54, 56, 66, 68, 70, 72) von jeder Gelenkverbindung angeordneten Schlitze (82) eindringen können.

11. Hinteres Modul (10) für ein Kraftfahrzeug, umfassend:
- eine Stütze (12) nach einem Ansprüche 1 bis 10,
- eine durch Schwenken um eine im Wesentlichen waagrechte Achse zu betätigende Tür (14),
- wenigstens eine Gelenkverbindung (16) mit einem festen Teil (18) und einem zum festen Teil (18) beweglichen Teil (20), um das Schwenken der Tür (14) zu ermöglichen, wobei der bewegliche Teil (20) mit der Tür (14) verbunden ist,
- Mittel zur Befestigung des festen Teils (18) der Gelenkverbindung (16) am Aufbau (22) des Fahrzeugs (24), und
- wenigstens eine funktionale Ausstattung (30, 32, 34, 36) des Fahrzeugs (24), getragen von der Stütze (12).

12. Hinteres Modul (10) nach Anspruch 11, wobei die funktionale Ausstattung (30) ein beliebiges der Elemente bestehend aus einer Antenne, einer Elektronikkarte (33), einem Zylinder (34) zum Unterstützen des Öffnens der Tür, ein Stellglied (32) zum Unterstützen des Öffnens und des Schließens der Tür (14), einer Rückfahrkamera (36), einer Scheibenwaschdüse, einem Scheibenwaschflüssigkeitsbehälter, einem Bremslicht, einer Beleuchtung für den Fahrzeuginnenraum ist.

13. Hinteres Modul (10) nach Anspruch 11 oder 12, wobei die Platte (28) der Karosserie mit der Tür (14) verbunden ist.

14. Hinteres Modul (10) nach Anspruch 13, wobei die Platte (28) der Karosserie ein Spoiler ist.

15. Hinteres Modul (10) nach einem der Ansprüche 11 bis 14, umfassend erste (50) und zweite (52) Gelenkverbindungen zum Schwenken, wobei jede Gelenkverbindung so beschaffen ist, dass ihr beweglicher Teil (58, 60, 62, 64) eine mit der Tür (14) verbundene Welle (62, 64) umfasst und ihr fester Teil (54, 56, 66, 68, 70, 72) zwei separate Lager (66, 68, 70, 72) umfasst, wobei die Welle und die Lager von jeder Gelenkverbindung koaxial sind.

16. Hinteres Modul (10) nach Anspruch 15, wobei die erste Gelenkverbindung (50) zwei Gleitlager (66, 68) umfasst, das heißt die ein axiales Verschieben der Welle der ersten Gelenkverbindung ermöglichen, und wobei die zweite (52) Gelenkverbindung ein Gleitlager (72) und ein Drucklager (70) umfasst, das heißt ein Lager, das eine von der Welle der zweiten Gelenkverbindung erzeugte Kraft aufnehmen kann.

17. Hinteres Modul (10) nach Anspruch 16, wobei die Stütze (12) einem der Ansprüche 6 bis 10 obligatorisch kombiniert mit Anspruch 6 entspricht, wobei:
- die Stütze Mittel zum Vorpositionieren (76, 80) der drei Gleitlager (66, 68, 72) umfasst, so dass die Achsen der Gleitlager (66, 68, 72) im Wesentlichen übereinstimmen, und
- das Drucklager (70) sich zur Stütze in der von den Achsen der Gleitlager definierten Richtung (Y) bewegen kann.

18. Verfahren zur Befestigung eines hinteren Moduls (10) nach einem der Ansprüche 11 bis 17 am Aufbau (22) eines Kraftfahrzeugs, **dadurch gekennzeichnet, dass** der Reihe nach folgende Schritte durchgeführt werden:
- Ausrichten des Moduls (10) mit der Tür (14) in geschlossener Stellung zum Aufbau (22), wobei die Gelenkverbindung (16) vom Äußeren des Fahrzeugs (24) aus zugänglich ist,
- Einstellen der Stellung der Tür (14) zu wenigstens einem Referenzpunkt (22, 38, 40, 42),
- Befestigen des festen Teils (18) der Gelenkverbindung (16) am Aufbau (22) des Fahrzeugs,
- Abdecken der Gelenkverbindung (16) mit der Platte (28) der Karosserie, so dass diese vom Fahrzeugäußeren aus weder zugänglich noch sichtbar ist.

19. Verfahren zur Befestigung nach Anspruch 18, wobei der Referenzpunkt aus einem der Elemente umfassend den Aufbau (22) des Fahrzeugs, eine Stoßstange (38), ein Karosserieteil, einen Kotflügel (40) des Fahrzeugs, ein Fahrzeugdach, ein Rücklicht (42) eines Fahrzeugs gewählt wird.
